# EUROPÄISCHE PATENTANMELDUNG

(11) **EP 3 282 527 A1**
(43) Veröffentlichungstag der Anmeldung: **14.02.2018**
(21) Anmeldenummer: 16183182.1
(22) Anmeldetag: 08.08.2016
(51) Int. Cl.: H02B 1/56, H02B 1/052

(54) **KLIMATISIERUNG VON ELEKTRISCHEN GERÄTEN MITTELS DRUCKLUFT**

(71) Anmelder: Siemens Aktiengesellschaft, 80333 München (DE)
(72) Erfinder: Dvorszky, Peter, 90763 Fürth (DE); Stürzenhofecker, Gerhard, 91452 Wilhermsdorf (DE)

(57) **Zusammenfassung**

Die Erfindung betrifft ein System zur Klimatisierung von elektrischen Geräten (DEV1, DEV2) mittels Druckluft (P). Um ein System zur Verfügung zu stellen, mit dem flexibel elektrische Geräte klimatisiert werden und damit für erweiterte Einsatzbereiche ertüchtigt werden können, wird vorgeschlagen, dass das System mindestens eine Klimatisierungsvorrichtung (100) und eine Verteilervorrichtung (120) aufweist, wobei die Klimatisierungsvorrichtung (100) zur direkten Klimatisierung mindestens eines elektrischen Geräts (DEV1, DEV2) mittels Druckluft (P) ausgestaltet ist und wobei die Verteilervorrichtung (120) zur Bereitstellung von Druckluft (P) für die Klimatisierungsvorrichtung (100) ausgebildet ist. Des Weiteren werden eine Klimatisierungsvorrichtung (100) zur Verwendung in einem erfindungsgemäßen System, ein Schaltschrank mit einem erfindungsgemäßen System sowie ein Verfahren zur Herstellung eines derartigen Systems angegeben.

## Beschreibung

Die Erfindung betrifft ein System zur Klimatisierung von elektrischen Geräten mittels Druckluft. Des Weiteren betrifft die Erfindung eine Klimatisierungsvorrichtung, einen Schaltschrank sowie ein Verfahren zur Herstellung eines Systems zur Klimatisierung von elektrischen Geräten. Ein derartiges System kann beispielsweise der industriellen Steuerungs- und Schalttechnik, der industriellen Spannungsversorgung sowie weiteren Anwendungen zum Einsatz kommen, bei denen eine leistungsfähige und wartungsarme Klimatisierung notwendig ist. Dies kann bei Anwendungen unter extremen Klimabedingungen, wie beispielsweise in heißen Wüstengebieten, feuchten und tropischen Gebieten oder extrem kalten Gebieten mit langen ausdauernden Wintern der Fall sein.

Bisher ist hoher konstruktiver Aufwand nötig, um elektrische Geräte für erweiterte zulässige Temperaturbereiche zu ertüchtigen. Ein erweiterter Temperaturbereich kann beispielsweise bei einem Überschreiten der zulässigen Maximaltemperatur oder einem Unterschreiten der zulässigen Mindesttemperatur vorliegen in der das elektrische Gerät eingesetzt wird. Es werden beispielsweise spezielle Gehäuse konstruiert und mit großflächigen Kühlkörpern und leistungsfähigen Lüftern oder Heizelementen versehen. Dies hat zur Folge, dass diese speziellen Geräte durch den deutlich erhöhten Konstruktions- und Materialaufwand entsprechend teurer und größer werden. Besonders bei kleinen Serien sehr spezieller Geräte ist es oftmals nicht wirtschaftlich, eine Variante für einen erweiterten Temperaturbereich zu konstruieren und zu vertreiben. Alternativ werden die Geräte in klimatisierte Schaltschränke eingebracht, die mit herkömmlichen Klimaanlagen klimatisiert werden. Dies ist wartungsaufwändig und kostenintensiv.

Aus DE 10 2012 100 974 A1 ist ein Lüfter und eine Anordnung aufweisend einen derartigen Lüfter bekannt. Die Befestigung des Lüfters beispielsweise in einem Schaltschrank erfolgt üblicherweise mittels einer Hutschiene. Der Lüfter weist eine Düse auf, die als bewegliche Düse ausgebildet sein kann, mit der der Luftstrom gelenkt werden kann.

Der Erfindung liegt die Aufgabe zugrunde, ein System zur Verfügung zu stellen, mit dem flexibel elektrische Geräte klimatisiert werden und damit für erweiterte Einsatzbereiche ertüchtigt werden können. Ferner ist es Aufgabe der Erfindung eine Klimatisierungsvorrichtung zur Verwendung in einem erfindungsgemäßen System, einen Schaltschrank mit einem erfindungsgemäßen System sowie ein Verfahren zur Herstellung eines derartigen Systems anzugeben.

Diese Aufgabe wird durch ein System mit den im Anspruch 1 angegebenen Merkmalen gelöst.

Der Erfindung liegt die Erkenntnis zu Grunde, dass ein System zur Klimatisierung von elektrischen Geräten mittels Druckluft vorteilhaft in bestehende und neu zu planende Anlagen von elektrischen Geräten integrierbar ist. Das System weist dazu mindestens eine Klimatisierungsvorrichtung und eine Verteilervorrichtung auf, wobei die Klimatisierungsvorrichtung derart ausgestaltet ist, dass sie eine direkte Klimatisierung mindestens eines elektrischen Geräts durch Druckluft ermöglicht und wobei die Verteilervorrichtung zur Bereitstellung von Druckluft für die Klimatisierungsvorrichtung ausgebildet ist.

Die Merkmale, die die einzelnen technischen Komponenten des Systems zur Klimatisierung von elektrischen Geräten aufweisen, sind dabei ebenso auf das System zur Klimatisierung von elektrischen Geräten übertragbar, ohne dass dies explizit erwähnt sein muss. Die Merkmale des Systems zur Klimatisierung von elektrischen Geräten, die auf die einzelnen Klimatisierungsvorrichtungen anwendbar sind, sind dabei ebenso übertragbar, ohne dass dies explizit erwähnt sein muss. Alle Kombinationen sind dabei als Ausgestaltungen der Erfindung zu sehen.

Klimatisierung soll im Sinne dieser Erfindung die Kühlung, Entfeuchtung und/oder Erwärmung bzw. Beheizung von elektrischen Geräten sein. Die elektrischen Geräte können dabei beispielsweise Komponenten eines modularen Automatisierungssystems sein. Solche modularen Automatisierungssysteme werden oftmals zur Befestigung an Befestigungssystemen, wie beispielsweise Hut- oder G-Schienen, angeboten. Kühlung durch Druckluft kann dabei durch direktes Anströmen mit Druckluft oder durch speziell vorgekühlte Druckluft erreicht werden. Ähnlich gilt dies für speziell entfeuchtete Druckluft bzw. vorgeheizte Druckluft für die Anwendungsfälle Entfeuchten und Erwärmen. Dass die Klimatisierung direkt erfolgt, soll ausdrücken, dass es sich hauptsächlich um eine direkte Klimatisierung von elektrischen Geräten handelt, beispielsweise durch direktes Anströmen mit Druckluft, im Gegensatz zu einer indirekten Klimatisierung durch ein Einbringen der elektrischen Geräte in eine klimatisierte Umgebung.

Die Verteilervorrichtung kann dabei beispielsweise aus Schläuchen oder anderen Druckluftkanälen bestehen und ist zur Bereitstellung von Druckluft für die Klimatisierungsvorrichtungen vorgesehen.

Die Klimatisierungsvorrichtungen können dabei Aufsteck-Aufsätze für bestehende elektrische Geräte sein. Es kann sich bei den Klimatisierungsvorrichtungen aber auch lediglich um einfache Schläuche handeln, die mit entsprechenden Luftauslässen versehen sind und die direkt in ein elektrisches Gerät eingeführt werden können.

Druckluft soll dabei Luft, ein reines Gas oder Gasgemisch mit einer anderen Zusammensetzung sein, je nach Verwendungszweck, die unter Druck in das System eingebracht werden. Druckluft wird beispielsweise mit Verdichtern (Kompressoren) erzeugt und kann in Drucklufttanks gespeichert werden. Die Vorteile der Nutzung von Druckluft liegt an der häufig im industriellen Umfeld vorhandenen Druckluftinfrastruktur, was wiederum zu einer Kostenersparnis bei der Klimatisierung führt. Auch die Möglichkeit des sehr wartungsarmen Aufbaus eines erfindungsgemäßen Systems ist vorteilhaft, da keine verschleißbehafteten drehenden Teile wie beispielsweise Lüfter nötig sind. Weiterhin sind die hohe Verfügbarkeit von Kompressortechnik, die zentral mit hoher Zuverlässigkeit und kostengünstig zur Verfügung gestellt werden kann, wichtige Argumente. In extrem empfindlichen Anlagen könnten Edelgase zum Einsatz kommen, die wieder aufgefangen und recycelt werden.

Die vorgeschlagene Lösung eignet sich damit nicht nur zur direkten Implementierung während der Konstruktion von Automatisierungssystemen, sondern ist auch als Options- oder Nachrüstlösung ideal, da der Platzbedarf gering und eine hohe Flexibilität hinsichtlich Verlegung und Verteilung der Druckluftinfrastruktur gegeben ist.

In einer vorteilhaften Ausführungsform weist das System eine Vorrichtung zur Klimatisierung der Druckluft auf. Diese Vorrichtung zur Klimatisierung der Druckluft kann dabei beispielsweise als eine Druckluftkühlung, eine Druckluftheizung, bzw. eine Vorrichtung zur Entfeuchtung der Druckluft ausgebildet sein. Dies ermöglicht es, den Einsatzbereich der elektrischen Geräte durch die klimatisierte Druckluft noch weiter zu erweitern, da nicht nur Druckluft mit der nach der Erzeugung vorliegenden Klimaeigenschaften verwendet werden kann, sondern entsprechend aufbereitete Druckluft verwendet wird. Die Vorrichtung zur Klimatisierung der Druckluft kann dabei weiterhin eine einstellbare Druckluft-Ausgangstemperatur und -Luftfeuchtigkeit aufweisen. So werden Steuerungen und Regelungen ermöglicht.

In einer vorteilhaften Ausgestaltung ist die Vorrichtung zur Klimatisierung der Druckluft zur Entfeuchtung, Kühlung und/oder Beheizung der Druckluft ausgebildet. Wie eingangs beschrieben, kann es sinnvoll sein, die Druckluft zusätzlich zu ihren nach der Erzeugung vorhandenen klimatischen Bedingungen zu entfeuchten, zu kühlen und/oder zu beheizen bzw. jeweils eine Kombination der drei Eigenschaften je nach Bedarf zu realisieren. Dies hat den Vorteil, dass der Einsatzbereich der elektrischen Geräte, die mit einem solchen System ausgerüstet werden, deutlich erweitert wird.

In einer weiteren vorteilhaften Ausführungsform ist die Verteilervorrichtung, zumindest teilweise, als ein Teil eines Befestigungssystems der elektrischen Geräte ausgebildet. Dies hat den Vorteil, dass große Bereiche der von der Verteilervorrichtung zu überbrückenden Strecken über Befestigungssysteme, die sowieso oft für die elektrischen Geräte vorhanden sind, überbrückt werden können. Hier ist es denkbar, dass an den Befestigungssystemen jeweils Druckluftauslässe bzw. Druckluftschnittstellen für die Klimatisierungsvorrichtungen vorgesehen sind. Weiterhin denkbar wären entsprechende Ventile, die zur Verbindung mit den Klimatisierungsvorrichtungen ausgebildet sind. Dies kann bspw. durch Stecken, Schrauben und/oder Klemmen geschehen.

In einer besonders vorteilhaften Ausführungsform ist die Verteilervorrichtung zumindest teilweise aus Materialien eines additiven Fertigungsverfahrens ausgebildet. Dies hat den besonderen Vorteil, dass die Verteilervorrichtung bereits bei der Planung der Klimatisierung der elektrischen Geräte im Engineering mit hohem Freiheitsgrad berücksichtigt werden kann und dann direkt additiv und spezialisiert auf den jeweiligen Anwendungsfall und -ort gefertigt werden kann. Dabei ist ebenso denkbar, dass nicht nur die Verteilervorrichtung, sondern auch die Klimatisierungsvorrichtungen direkt zusammen in einem Arbeitsschritt additiv gefertigt werden. Somit können für jede mögliche Aufbauform direkt die entsprechenden Klimatisierungsvorrichtungen mit den daran angeschlossenen Verteilervorrichtungen gefertigt werden. Dies ist besonders effizient und sorgt für flexible Einsatzmöglichkeiten des Systems. Materialien additiver Fertigungsverfahren sind beispielsweise Polymere in Pulver- oder Pelletform, Metalle in Pulver- oder Drahtform und Keramiken. Metallpulver können bspw. durch Laser zum Schmelzen gebracht werden und in Schichten aufgebaut werden, Kunststoffe können z.B. durch Extrusionsverfahren verarbeitet werden.

In einer weiteren vorteilhaften Ausgestaltung sind die Verteilervorrichtung und/oder die Klimatisierungsvorrichtung zumindest teilweise als ein Teil einer Leiterplatte eines zu klimatisierenden Gerätes ausgebildet. Es können also Druckluftkanäle in Leiterplatten, wie beispielsweise PCBs - sog. Printed Circuit Boards, von elektrischen Geräten vorgesehen werden. Es können dabei ebenso entsprechend klein dimensionierte Klimatisierungsvorrichtungen verwendet werden, die zur direkten Klimatisierung der entsprechenden Bauteile der elektrischen Geräte beitragen. Dabei ist es denkbar, dass entsprechende Druckminderer zum Einsatz kommen, um ein für die Leiterplatte akzeptables Druckniveau zu erreichen.

In weiteren besonders vorteilhaften Ausführungsformen weist das System und/oder die Klimatisierungsvorrichtung mindestens ein Ventil zur Steuerung der Druckluft auf. Diese Ventile können dabei beispielsweise als selbstregulierende Düsen, Schlauchöffnungen oder klassische Ventile ausgebildet sein. Als Ventile können bimetallische Ventile, die bei Über- oder Unterschreiten einer bestimmten Temperatur öffnen oder schließen, und/oder entsprechende Materialien mit Memoryeffekt aus denen direkt selbstregulierende Düsen geformt werden können, vorgesehen sein. Elektrische oder anderweitig ansteuerbare Ventile, wie Magnetventile, in Verbindung mit einer aktiven Steuerung oder Regelung der Temperatur und/oder Luftfeuchtigkeit sind denkbar um eine hohe geregelte oder zumindest gesteuerte Klimaqualität zu erreichen.

Die Aufgabe wird weiterhin durch eine Klimatisierungsvorrichtung zur Verwendung in einem erfindungsgemäßen System gelöst, wobei die Klimatisierungsvorrichtung mindestens eine Druckluftschnittstelle und einen Druckluftauslass aufweist. Die Druckluftschnittstelle muss dabei nicht zwangsläufig eine physische Schnittstelle und/oder eine mechanisch trennbare Schnittstelle sein, sondern kann auch den Übergang der Druckluft von einer Verteilervorrichtung in eine Klimatisierungsvorrichtung beschreiben. Druckluftauslässe sind beispielsweise als entsprechende Öffnungen in den Klimatisierungsvorrichtungen vorzusehen. Vorteilhaft sind dabei Druckluftauslässe, die direkt auf die im elektrischen Gerät zu klimatisierenden Komponenten gerichtet sind. Die Druckluftauslässe können dabei wiederum als Düsen ausgebildet sein, die die Strömungsgeschwindigkeit und/oder den Strömungsquerschnitt der Druckluft verändern.

In einer weiteren vorteilhaften Ausgestaltung weist die Klimatisierungsvorrichtung eine Befestigungsvorrichtung zur Befestigung an einem elektrischen Gerät auf. Die Befestigungsvorrichtung kann dabei beispielsweise als Clip ausgebildet sein. Es sind aber jegliche weitere Verbindungen denkbar, wie Schrauben, Stecken, oder sogar thermische Klebeverbindungen (bspw. Wärmeleitkleber), die den Vorteil der Wärmeleitung mit sich bringen. Klebeverbindungen haben den weiteren Vorteil, dass die Klimatisierungsvorrichtung und ihre Verbindung zum elektrischen Gerät dadurch eine höhere Dichtigkeit aufweist.

In einer weiteren vorteilhaften Ausgestaltung weist die Klimatisierungsvorrichtung eine Befestigungsvorrichtung zur Befestigung an einem Befestigungssystem der elektrischen Geräte auf. So kann die Klimatisierungsvorrichtung selbst direkt an einer Hut-, G- oder weiteren Schiene befestigt werden. Dies unterstreicht das modulare Konzept und bietet eine hohe Flexibilität sowie eine breite Akzeptanz in der industriellen Automatisierung.

Die Aufgabe wird weiterhin durch einen Schaltschrank mit einem erfindungsgemäßen System zur Klimatisierung von elektrischen Geräten mittels Druckluft gelöst. Durch das Kombinieren des erfindungsgemäßen Systems mit einem geschlossenen Schaltschrank verstärken sich die positiven Effekte des Systems noch weiter. Dies erhöht die Energieeffizienz des Systems und verringert den Druckluftverbrauch.

Die Aufgabe wird weiterhin gelöst durch ein Verfahren zur Herstellung eines erfindungsgemäßen Systems zur Klimatisierung von elektrischen Geräten, wobei zumindest Teile einer Klimatisierungsvorrichtung und/oder einer Verteilervorrichtung mittels eines additiven Fertigungsverfahrens hergestellt werden. Auch die Klimatisierungsvorrichtung selbst und/oder die Verteilervorrichtung können mittels eines additiven Fertigungsverfahrens hergestellt werden.

Im Folgenden wird die Erfindung anhand der in den Figuren dargestellten Ausführungsbeispiele näher beschrieben und erläutert.
- FIG 1: zeigt schematisch ein System zur Klimatisierung von zwei elektrischen Geräten,
- FIG 2: zeigt eine perspektivische Darstellung eines Systems zur Klimatisierung von elektrischen Geräten und
- FIG 3: zeigt eine perspektivische Darstellung eines Systems zur Klimatisierung von elektrischen Geräten mit einer alternativen Verteilervorrichtung.

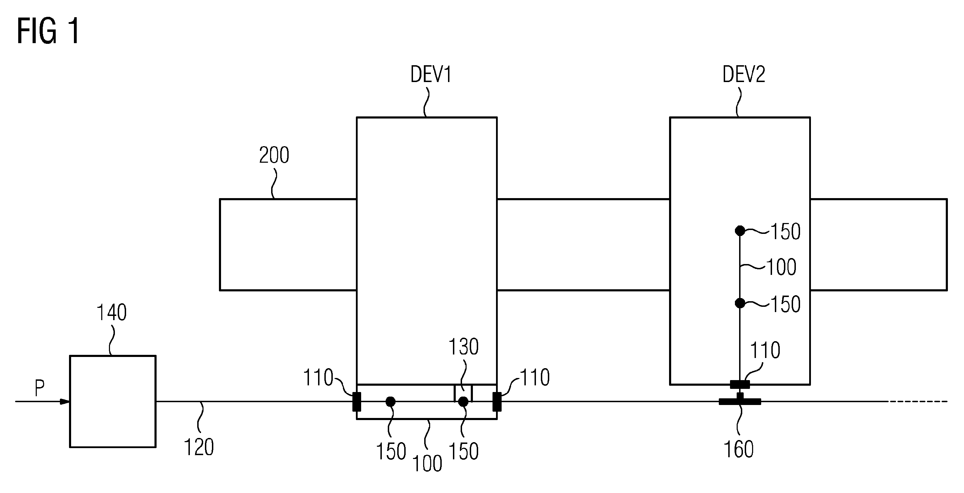

FIG 1 zeigt zwei elektrische Geräte DEV1, DEV2, die auf einem Befestigungssystem 200 befestigt sind. Zur Klimatisierung der elektrischen Geräte DEV1, DEV2 ist ein System vorgesehen, das Druckluft P über eine Vorrichtung 140 zur Klimatisierung der Druckluft P einer Verteilervorrichtung 120 zur Verfügung stellt. Das linke elektrische Gerät DEV1 weist eine Klimatisierungsvorrichtung 100 auf, die unterhalb des elektrischen Geräts DEV1 angebracht ist. Die Klimatisierungsvorrichtung 100 weist dabei eine Druckluftschnittstelle 110 eingangsseitig und eine weitere Druckluftschnittstelle 110 ausgangsseitig auf. Die Druckluftschnittstellen 110 können dabei steckbar ausgestaltet sein, es ist aber ebenso denkbar, dass durchgängige Leitungen mit Druckluftabzweigen 160 verwendet werden. Innerhalb der Klimatisierungsvorrichtung 100 befinden sich ein Druckluftauslass 150 ohne Ventil 130 sowie Druckluftauslass 150 mit einem Ventil 130. Der Druckluftauslass 150 ist dabei ein ungesteuerter Druckluftauslass 150, der für eine ständige Klimatisierung des Geräts DEV1 sorgt. Das Ventil 130 steuert den zugehörigen Druckluftauslass 150 derart, dass unter bestimmten Bedingungen eine erweiterte Klimatisierung des Gerätes DEV1 möglich ist. Das Ventil 130 kann dabei beispielsweise elektrisch oder anderweitig angesteuert werden oder durch die Klimabedingungen, die im oder am elektrischen Gerät DEV1 vorherrschen, selbsttätig ausgelöst werden. Über die ausgangsseitige Druckluftschnittstelle 110 versorgt die Verteilervorrichtung 120 einen Druckluftabzweig 160 unterhalb des zweiten elektrischen Geräts DEV2 mit Druckluft P. Der Druckluftabzweig 160 stellt der Druckluftschnittstelle 110 des zweiten elektrischen Geräts DEV2 Druckluft P zur Klimatisierung zur Verfügung. Die Klimatisierungsvorrichtung 100 ist dabei in das zweite elektrische Gerät DEV2 integriert und könnte hier lediglich als ein Schlauch mit zwei Druckluftauslässen 150 ausgebildet sein. Die Verteilervorrichtung 120 endet mit einer gestrichelten Linie, was andeuten soll, dass noch problemlos weitere elektrische Geräte DEV1, DEV2 und Klimatisierungsvorrichtungen 100 angeschlossen werden können.

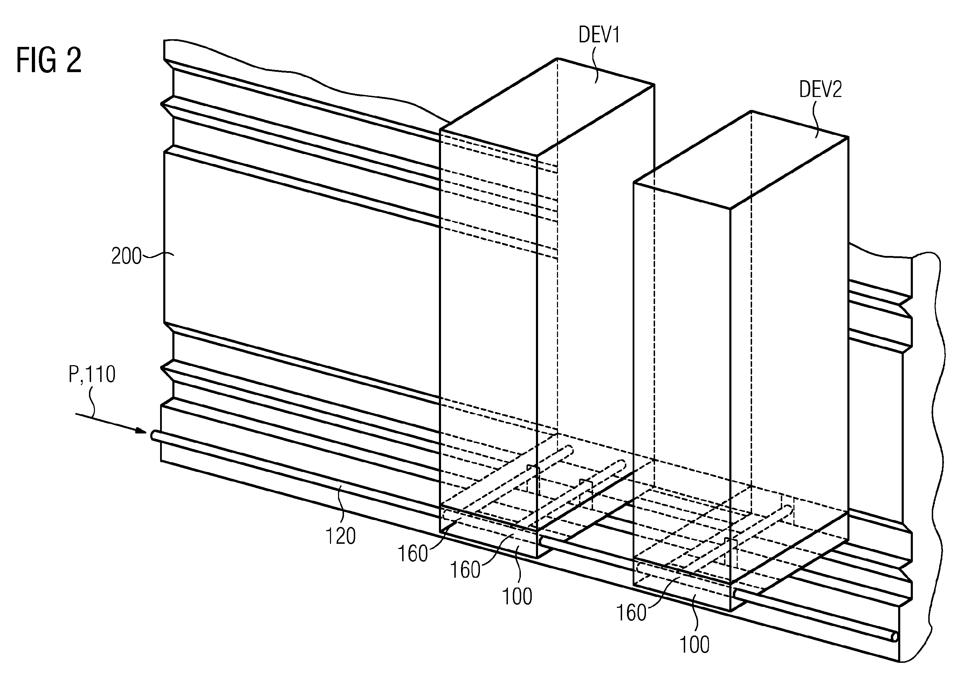

FIG 2 zeigt eine perspektivische Darstellung eines Systems zur Klimatisierung von elektrischen Geräten DEV1, DEV2 mittels Druckluft P, wobei die elektrischen Geräte DEV1, DEV2 an einem Befestigungssystem 200 befestigt sind. Die Bezugszeichen werden dabei analog zu FIG 1 verwendet. Die Druckluft P wird in FIG 2 über eine Schnittstelle 110 auf der linken Seite zur Verfügung gestellt. Diese Schnittstelle 110 kann beispielsweise als ein Teil des Befestigungssystems 200 ausgebildet sein. Auch die Verteilervorrichtung 120 kann dabei teilweise oder vollständig als ein Teil des Befestigungssystems 200 ausgebildet sein. Dazu können bereits bei der Produktion eines entsprechenden Befestigungssystems 200 entsprechende Kanäle und Schnittstellen 110 vorgesehen werden. Von den gezeigten elektrischen Geräten DEV1, DEV2 weisen beide elektrische Geräte DEV1, DEV2 jeweils eine Klimatisierungsvorrichtung 100 auf. Dabei weist die Klimatisierungsvorrichtung 100 des ersten elektrischen Geräts DEV1 zwei Druckluftabzweige 160 auf, die die Druckluft P zur Klimatisierung des elektrischen Gerätes DEV1 zur Verfügung stellen. Die Klimatisierungsvorrichtungen 100 sind dabei modular ausgeführt, und können beispielsweise steckbare oder anderweitig verbindbare Schnittstellen 110 (nicht gezeigt) aufweisen. Es ist auch möglich, dass die Klimatisierungsvorrichtungen 100 mit der Verteilervorrichtung 120 mit einem additiven Fertigungsverfahren aus einem Stück gefertigt werden. Die zweite Klimatisierungsvorrichtung 100 des rechten elektrischen Geräts DEV2 weist nur einen Druckluftabzweig 160 auf. Der Übersichtlichkeit wegen sind keine Druckluftauslässe 150 oder Ventile 130 gezeigt, diese können aber je nach Bedarf, z.B. wie in FIG 1 gezeigt, zur Klimatisierung der elektrischen Geräte DEV1, DEV2 angebracht sein.

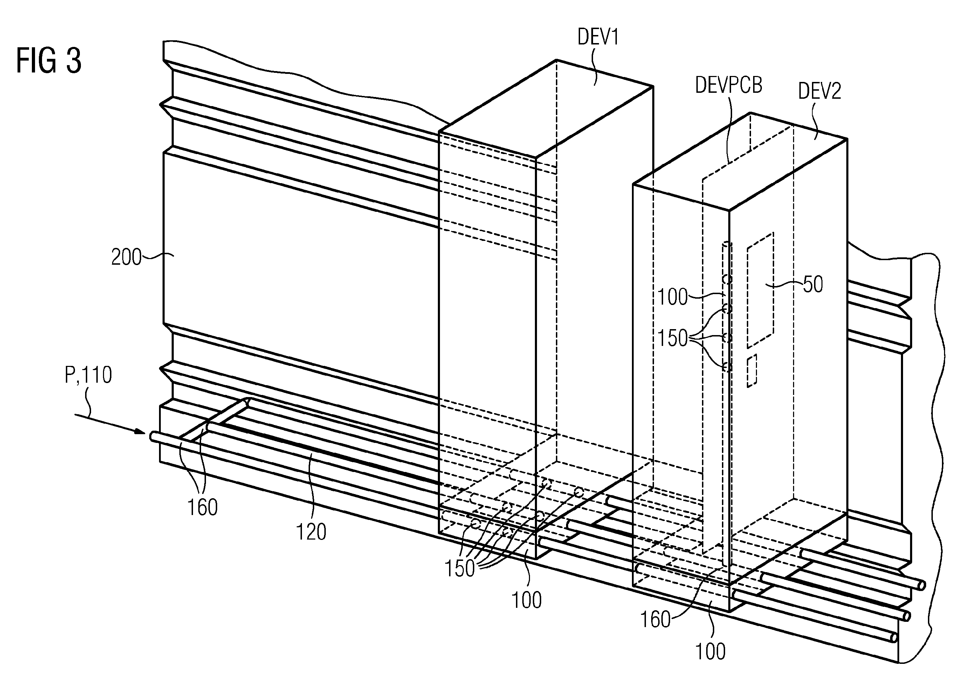

FIG 3 zeigt unter Beibehaltung der Bezugszeichen aus den Figuren FIG 1, FIG 2 eine Verteilervorrichtung 120, die wiederum drei Leitungen aufweist und durch Druckluftabzweige 160 auf diese drei Leitungen aufgeteilt ist. Das linke elektrische Gerät DEV1 ist mit einer Klimatisierungsvorrichtung 100 versehen, die aus jeder der drei Leitungen jeweils zwei Druckluftauslässe 150 zur Klimatisierung des elektrischen Geräts DEV1 vorsieht. Insgesamt sind für das erste elektrische Gerät DEV1 also sechs Druckluftauslässe 150 vorgesehen. Dies ermöglicht eine besonders gleichmäßige Durchströmung und damit Klimatisierung des elektrischen Geräts DEV1.

Das zweite elektrischen Geräts DEV2 weist eine Klimatisierungsvorrichtung 100 unterhalb des elektrischen Geräts DEV2 auf. Diese kann wie die Vorrichtung des ersten elektrischen Geräts DEV1 ausgebildet sein. Innerhalb des zweiten elektrischen Geräts DEV2 ist in die Leiterplatte DEVPCB des zweiten elektrischen Gerätes DEV2 eine weitere Klimatisierungsvorrichtung 100 eingelassen. Das zu kühlende Bauteil 50 wird so direkt durch Luftauslässe 150 in der Leiterplatte DEVPCB klimatisiert. Dies ist besonders vorteilhaft, da so nicht mehr nachträglich Druckluftleitungen in das elektrische Gerät DEV2 verlegt werden müssen und somit eine effiziente Klimatisierung des elektrischen Geräts DEV2 möglich ist.

Zusammenfassend betrifft die Erfindung ein System zur Klimatisierung von elektrischen Geräten DEV1, DEV2 mittels Druckluft P. Um ein System zur Verfügung zu stellen, mit dem flexibel elektrische Geräte klimatisiert werden und damit für erweiterte Einsatzbereiche ertüchtigt werden können, wird vorgeschlagen, dass das System mindestens eine Klimatisierungsvorrichtung 100 und eine Verteilervorrichtung 120 aufweist, wobei die Klimatisierungsvorrichtung 100 zur direkten Klimatisierung mindestens eines elektrischen Geräts DEV1, DEV2 mittels Druckluft P ausgestaltet ist und wobei die Verteilervorrichtung 120 zur Bereitstellung von Druckluft P für die Klimatisierungsvorrichtung 100 ausgebildet ist. Des Weiteren wird eine Klimatisierungsvorrichtung 100 zur Verwendung in einem erfindungsgemäßen System, ein Schaltschrank mit einem erfindungsgemäßen System sowie ein Verfahren zur Herstellung eines derartigen Systems angegeben.

## Patentansprüche

1. System zur Klimatisierung von elektrischen Geräten (DEV1, DEV2) mittels Druckluft (P), aufweisend mindestens eine Klimatisierungsvorrichtung (100) und eine Verteilervorrichtung (120), wobei die Klimatisierungsvorrichtung (100) zur direkten Klimatisierung mindestens eines elektrischen Geräts (DEV1, DEV2) mittels Druckluft (P) ausgestaltet ist und wobei die Verteilervorrichtung (120) zur Bereitstellung von Druckluft (P) für die Klimatisierungsvorrichtung (100) ausgebildet ist.

2. System nach Anspruch 1, aufweisend mindestens eine Vorrichtung (140) zur Klimatisierung der Druckluft (P).

3. System nach Anspruch 2, wobei die Vorrichtung (140) zur Klimatisierung der Druckluft (P) zur Entfeuchtung, Kühlung und/oder Beheizung der Druckluft (P) ausgebildet ist.

4. System nach einem der vorhergehenden Ansprüche, wobei die zumindest eine Klimatisierungsvorrichtung (100) zum direkten Anströmen von zumindest Teilen der zu klimatisierenden elektrischen Geräten (DEV1, DEV2) ausgebildet ist.

5. System nach einem der vorhergehenden Ansprüche, wobei die Verteilervorrichtung (120) zumindest teilweise als ein Teil eines Befestigungssystems (200) der elektrischen Geräte (DEV1, DEV2) ausgebildet ist.

6. System nach einem der vorhergehenden Ansprüche, wobei die Verteilervorrichtung (120) und/oder die Klimatisierungsvorrichtung (100) zumindest teilweise aus Materialien eines additiven Fertigungsverfahrens ausgebildet sind.

7. System nach einem der vorhergehenden Ansprüche, wobei die Verteilervorrichtung (120) und/oder die Klimatisierungsvorrichtung (100) zumindest teilweise als ein Teil einer Leiterplatte (DEVPCB) eines zu klimatisierenden Geräts (DEV1, DEV2) ausgebildet sind.

8. System nach einem der vorhergehenden Ansprüche, aufweisend mindestens ein Ventil (130) zur Steuerung der Druckluft (P).

9. Klimatisierungsvorrichtung (100) zur Verwendung in einem System nach einem der vorhergehenden Ansprüche, aufweisend eine Druckluftschnittstelle (110) und mindestens einen Druckluftauslass (150), wobei der Druckluftauslass (150) zur Klimatisierung eines elektrischen Geräts (DEV1, DEV2) ausgebildet ist.

10. Klimatisierungsvorrichtung (100) nach Anspruch 9, aufweisend eine Befestigungsvorrichtung zur Befestigung an einem elektrischen Gerät (DEV1, DEV2).

11. Klimatisierungsvorrichtung (100) nach Anspruch 9 oder 10, aufweisend eine Befestigungsvorrichtung zur Befestigung an einem Befestigungssystem (200) der elektrischen Geräte (DEV1, DEV2).

12. Schaltschrank mit einem System zur Klimatisierung von elektrischen Geräten (DEV1, DEV2) mittels Druckluft (P) nach einem der Ansprüche 1 bis 8.

13. Verfahren zur Herstellung eines Systems zur Klimatisierung von elektrischen Geräten (DEV1, DEV2) nach einem der Ansprüche 1 bis 8, wobei zumindest Teile einer Klimatisierungsvorrichtung (100) und/oder einer Verteilervorrichtung (120) mittels eines additiven Fertigungsverfahrens hergestellt werden.
